# EUROPEAN PATENT APPLICATION

(11) **EP 4 253 302 A1**
(43) Date of publication of application: **04.10.2023**
(21) Application number: 22164964.3
(22) Date of filing: 29.03.2022
(51) Int. Cl.: B66C 13/08, B66C 1/10, F03D 13/10

(54) **METHOD FOR LIFTING A WIND TURBINE ROTOR BLADE AND LIFTING YOKE**

(71) Applicant: Siemens Gamesa Renewable Energy A/S, 7330 Brande (DK)
(72) Inventor: Jepsen, Andreas Winther, 7100 Vejle (DK); Madsen, Jonas, 6731 Tjæreborg (DK); Moeller, Jesper, 7330 Brande (DK); Toenning, Simon Lindbjerg, 8000 Aarhus C (DK)
(74) Representative: SGRE-Association

(57) **Abstract**

Method for lifting a wind turbine rotor blade (1) using a lifting yoke (2) comprising a main body (3) attached to a rope-like lifting means (6), wherein the main body (3) is attached to the rotor blade (1), wherein at least two gyroscopic stabilization units (11, 12) each arranged laterally offset to the lifting means (6) at the main body (3) and/or the rotor blade (1) are used, wherein the gyroscopic stabilization units (11, 12) each comprise a rotating member (38, 39) with a deflectable rotational axis (29, 30), wherein the rotating members (38, 39) apply an adjustable stabilizing torque in at least one stabilizing torque direction (32, 33) in dependence of a disturbance movement of the lifting yoke (2) and/or the rotor blade (1) at least temporarily during lifting.

## Description

The invention relates to a method for lifting a wind turbine rotor blade using a lifting yoke comprising a main body attached to the rotor blade and to a rope-like lifting means. Furthermore, the invention relates to a lifting yoke.

Wind turbine rotor blades may be lifted by lifting yokes for instance during the erection of wind turbines, wherein the rotor blades may have to be attached to a hub mounted on a tower of the wind turbine. The lifting yoke may be coupled for instance to a crane for lifting a rotor blade from a land vehicle or a vessel and for moving it closer to the hub for installation of the rotor blade. Lifting yokes may be used to lift a rotor blade for instance in a vertical or horizontal orientation.

Generally, rotor blades comprise a tip and a root-end, wherein the root-end of the rotor blade is attached to the hub of the wind turbine. This requires to lift the rotor blade in a stable orientation, so that the root-end of the comparatively long rotor blade may be attached to the corresponding attachment section at the hub of the blade. Due to the size of the rotor blades and also due the requirement to enable an installation of the rotor blades at comparatively high wind speeds, in particular at offshore locations, movements of the blade root in vertical and/or horizontal direction, which are generated by the wind acting on the lifted rotor blade, may occur making the installation difficult. In particular, a tilting movement of the rotor blade, which causes vertical movements of the root-end, as well as yawing movements, which cause the rotor blade to turn with respect to a crane hook or the like, put a lot of risk on the installation process and on the safety of the personnel.

A method for stabilizing the movements of the rotor blade is the usage of taglines, which connect the lifting yoke and/or the rotor blade to a stationary structure like a crane boom to control and/or constrain the movements of the lifting yoke and/or the rotor blade during lifting. Therefore, the taglines can be coupled to winches in order to adapt their length and to maintain the desired orientation of the lifting yoke and/or the rotor blade during lifting.

Because of the requirement to install larger rotor blades for future wind turbines and/or to enable an installation of rotor blades at higher wind speeds, there will be the necessity to use more taglines and/or corresponding winches for stabilizing the orientation of the rotor blade during lifting. Correspondingly, also the forces acting on a stationary structure like a crane may increase by the number of taglines used making a realization of these processes even more difficult.

Furthermore, by using taglines between the lifting yoke and the crane, the flexibility of the lifting operation is reduced since the taglines, which span between the crane and the lifting yoke, may not be blocked by other components during the lifting procedure and/or during a slewing of the lifting yoke. In particular, the attachment of the lifting yoke to a rotor blade, which is for instance stored on a storage arrangement in the vicinity of the wind turbine to be erected, may become more difficult since the rotor blade may be picked up only without any contact between the taglines and the storage structure or surrounding structures. Hence, the usage of increasing numbers of taglines also requires larger free spaces for operation of the lifting yoke, especially during pick-up of the rotor blade.

In particular, when rotor blades at off-shore wind turbines are installed, the arrangement on the deck of a vessel used for transporting the rotor blades may make the attachment of the lifting yoke to the rotor blades challenging, when taglines are used for stabilizing the orientation of the lifting yoke. In addition, constant control of the taglines is required during the pick-up of the blade and during the subsequent lifting process.

The taglines used for stabilizing the yoke may have an unfavorable vertical angle between the crane and the lifting yoke during pick-up of the rotor blade, as the crane may be attached high over the deck level and therefore high above the rotor blades to be picked up. Therefore, by the taglines running mainly vertical, only low controlling forces in the horizontal directions can be applied to a lifting yoke making also the attachment of the yoke to the rotor blade difficult. However, without the usage of the taglines, the attachment of the rotor blade to the hub may become very difficult due to the unsteady orientation of the lifted rotor blade relative to the hub of a wind turbine.

Consequently, there is a need for stabilizing the lifting yoke and/or a rotor blade attached to the lifting yoke. For stabilizing movements, the usage of stabilization devices making use of the gyroscopic effect are known. Such stabilizing gyroscopes are known for example as roll-movement stabilizers in vessels. From the prior art, the usage of such a stabilizing gyroscope is also known for stabilizing lifting devices.

In WO 2018/192675 A1, a method for installing components of a wind turbine using a lifting device for lifting the respective component is known. The lifting device is attached to at least one cable, wherein at least one stabilization device is arranged underneath the cable for stabilizing the component against vibration induced by external forces. The stabilization device stabilizes by means of the gyroscopic effect, wherein the stabilization device provides counterforces in reaction of an external force acting on the component.

WO 2021/038057 A1 describes a method for lifting an object from a vessel deck. Therefore, an attaching means is coupled to the object and to a hoisting cable used for lifting the attaching means and the object. The hoisting cable is connected to a gyroscope for damping swinging movements of the attaching means and the object connected thereto during lifting. The gyroscope comprises a rotation-symmetrical body rotating around a primary rotation axis.

It is the object of the invention to provide an improved method for lifting a wind turbine rotor blade, which in particular enables an improved stabilization of the lifting yoke and/or the rotor blade to be lifted.

According to the invention, this object is solved by a method as initially described, wherein at least two gyroscopic stabilization units each arranged laterally offset to the lifting means at the main body and/or the rotor blade are used, wherein the gyroscopic stabilization units each comprise a rotating member with a deflectable rotational axis, wherein the rotating members apply an adjustable stabilizing torque in at least one stabilizing torque direction in dependence of a disturbance movement of the lifting yoke and/or the rotor blade at least temporarily during lifting.

The main body of the lifting yoke may comprise for instance a frame structure with one or more attachment sections for attaching the lifting yoke to the rotor blade. The attachment sections may be for instance clamping sections, which at least partly surround an outer circumference of the rotor blade for firmly attaching the blade to the lifting yoke during picking up and for releasing the rotor blade after it has been mounted to the hub of a wind turbine to be installed.

The lifting yoke may be adapted to lift a rotor blade with a its longitudinal or spanwise axis oriented horizontally. The chord direction of blade, which spans between a leading edge and a trailing edge of the rotor blade, may be oriented horizontally or vertically during lifting. Hence, the rotor blade may be lifted by the lifting yoke in a vertical chord orientation, or a pitch of 0°, respectively, or in a horizontal chord orientation, with a pitch of 90°, preferably with the blade tip pointing upwards. In addition or alternatively, also other orientations of the longitudinal axis and/or the of the chord direction of the blade attached to the lifting yoke are possible.

In order to compensate disturbance movements of the lifting yoke and/or the rotor blade, at least two gyroscopic stabilization units attached to the lifting yoke and/or the rotor blade are used. The gyroscopic stabilization units are arranged laterally offset from the lifting means and hence with a horizontal offset to the lifting means, or to a fixation section of the lifting means at the lifting yoke, respectively. The gyroscopic stabilization units may be attached for instance at the lifting yoke and/or the rotor blade neighboring to the lifting means, or neighboring to the fixation section, respectively. The stabilization units may be arranged symmetrically or non-symmetrically with respect to the fixation section.

The gyroscopic stabilization units each comprise a rotating member, which is rotating around a rotational axis. The rotational axis is deflectable so that the orientation of the rotational axis can be changed, for instance by pivoting the axis. The rotational axes may be arranged for instance in a vertical initial position, wherein the rotational axes are deflected from this initial parallel orientation for the application of the stabilizing torque. The two or more gyroscopic stabilization units may be oriented initially in the same direction so that their rotational axes may be initially parallel. The deflection of the rotational axes from this initial state can occur for instance in the same or in different, in particular in opposite, directions. When the rotational axes of the stabilization units are deflected in different or opposite directions, the rotational axes are no longer parallel in the deflected state.

When the rotational axis or the gyroscopic stabilization unit is deflected, a precession movement of the rotational axis is constrained to one direction so that the rotating member generates a counter-acting torque used as the stabilization torque. The deflection angle, which may also be denominated as precession angle, may be varied for instance between -70° and + 70° relative to a vertical or horizontal orientation reference position of the rotational axis. In particular, the stabilization units generate the stabilization torque in the same stabilizing torque direction, or in a common stabilizing torque direction, respectively.

In dependence of the direction, in which the rotating member is deflected, and/or in dependence of the constrained direction, different stabilizing torque directions can be obtained. Furthermore, by the extent and the speed of the deflection and/or further parameters of the gyroscope, the magnitude of the stabilizing torque can be adjusted, in particular to match the disturbance movement, or a torque acting on the lifting and/or a rotor blade causing the disturbance movement, respectively. The magnitude of the stabilization torque may be adjusted for instance by the angular velocity, with which the rotational axis is deflected. The disturbance movement, or disturbance rotation, respectively, of the lifting yoke and/or the rotor blade may be caused in particular by wind acting on the lifting yoke and/or the rotor blade during the lifting procedure.

The stabilizing torque, which is created by the gyroscopic stabilization units, may also be denominated as stabilizing moment or as stabilizing rotational force, respectively. In this context, the stabilization torque direction is the direction around which a torque in counter-clockwise direction is created.

Advantageously, by the usage of the at least two gyroscopic stabilization units, the usage of taglines for stabilizing the lifting yoke and/or the rotor blade may be avoided, or at least the number of vertical and/or horizontal taglines may be reduced due to the improved stability of the lifting yoke and/or the rotor blade. The usage of two or more gyroscopic stabilization units has the advantage that an improved stabilization of the lifting yoke and/or the rotor blade can be obtained, in particular to compensate or dampen movements in the directions that are most relevant for the attachment of the root-end of the blade to the hub. This allows for lifting the rotor blade also at higher wind speeds, for instance of wind speed up to 16 m/s or even higher.

In addition, a reduced movement of the lifting yoke and/or the rotor blade during the installation has the advantage that the installation time can be reduced since the attachment of the rotor blade to a hub of a wind turbine to be erected may occur faster. Reduced installation times of the rotor blades have the advantage that also a wind turbine downtime during a repair procedure, in which a rotor blade of the wind turbine is replaced, become shorter. Decreased down-times during repair procedure and/or decreased installation time periods have a positive impact on the operational effectiveness of the wind turbine since the operational time of the wind turbine can be increased.

In addition, the installation procedure can be facilitated due to reduced disturbance movements of the rotor blade, in particular due to reduced disturbance movements of a root-end of the rotor blade relative to a stationary hub. In addition, also the safety of the personnel during the installation procedure may be improved. Furthermore, a stable lifting of the rotor blade enables the installation of longer rotor blades, which are more prone to disturbance movements during lifting, so that larger and/or more efficient wind turbine rotor blades can be installed due to the usage of the two or more gyroscopic stabilization units.

Since the usage of taglines may be reduced or even neglected, the pick-up procedure of the blade, hence the attachment of the lifting yoke to a rotor blade stored for instance on a deck of vessel, prior to or at the beginning of the lifting procedure can occur in a more controllable manner so that the risk of blade damage and/or damage inflicted to the surroundings due to bad tagline control and/or due to an obstructing deck arrangement may be reduced advantageously.

The lifting yoke may be lifted by a hoisting means, for instance a crane. The lifting yoke may be coupled to the hoisting means via the rope-like lifting means. For example, a lifting means attached to the boom of a crane is used. The lifting means may be for instance a lifting cable, a chain, an arrangement of one or more cables and/or chains or the like. The lifting means may be coupled to the lifting yoke for instance by a releasable coupling means of the lifting means, in particular by a hook, a clamp of the like. By the usage of the at least two gyroscopic stabilization units, advantageously also the loads acting on the hoisting means like a crane may be reduced, so that the usage of larger and/or more stable hoisting means may be avoided for lifting larger blades and/or for operations in harsh weather conditions.

In a preferred embodiment, the gyroscopic stabilization units are operated in such manner that their stabilizing torques are directed in the same stabilizing torque direction, wherein secondary torques caused by the gyroscopic stabilization units are applied in a direction orthogonal to the stabilizing torque.

In addition to the stabilizing torque, due to the constrained precession movement of the rotating member, also a secondary torque is created, in particular in a direction orthogonal to the stabilizing torque direction. The secondary torque may be fluctuating and cause in particular a periodic movement of the lifting yoke and/or the rotor blade in a direction orthogonal to the compensated disturbance movement. Advantageously, by operating the gyroscopic stabilization units in such manner that their stabilizing torque directions are directed in the same stabilizing torque direction, wherein the secondary torques are applied in a direction orthogonal to the stabilizing torque, the secondary torques may cancel out at least partly.

This has the advantage that the influence of the secondary torques on the orientation of the lifting yoke and/or the lifted rotor blade are cancelled out entirely or at least partly. This further increases the stabilization of the lifting yoke and/or the rotor blade, since the generation of the stabilizing torque used for counter-acting the disturbance movement of the lifting yoke and/or the rotor blade are not negatively affected by the secondary torques.

The amount of secondary torque that is created by each of the gyroscopic stabilization units may depend on the amount of stabilizing torque created and therefore also on the angle of deflection of the rotational axis. In particular, for larger deflections of the rotational axis of the rotating member, the relationship between the secondary torque and the stabilizing torque may become larger resulting in an increased influence of the secondary torque, which may be undesired with regard to the stabilization of the lifting yoke and/or the rotor blade.

In particular, the direction of the secondary torque may change its direction throughout the deflection of the rotational axis so that the lifting yoke and/or the rotor blade may begin for example to rotate back and forth, if the secondary torque causes a yawing movement of the lifting yoke, or the rotor blade, respectively. Advantageously, by operating the gyroscopic stabilization unit in such manner that the secondary torques caused by the gyroscopic stabilization units are applied continuously in opposing directions, the effect of the secondary torques on the orientation of the lifting yoke and/or the rotor blade may be reduced or even fully avoided. In case of periodic secondary torques comprising a periodically varying direction, a phase shift between the secondary torques may be adjusted in such manner that the respective secondary torques of the gyroscopic stabilization units are directed continuously in opposing directions for cancellation.

Preferably, the rotating members of the gyroscopic stabilization units are rotating in opposite directions in relation to a parallel orientation of their rotational axes, wherein the rotational axes of the rotating members are deflected in opposite directions for applying the stabilizing torque. For instance relative to an initial state, in which the rotational axes may be vertical and/or parallel, the rotating members may be rotating in opposite direction, for instance each either in clockwise or counterclockwise direction in relation to rotational axes arranged in parallel. In such a configuration, the secondary torques created by the rotating members are oriented in opposite directions so that they cancel each other out at least partially. The stabilizing torques, however, are directed in the same stabilizing torque directions so that they are applied mutually for reducing the unintended disturbance movement of the lifting yoke and/or the rotor blade.

In a preferred embodiment, the gyroscopic stabilization units are adjustable to apply the stabilizing torque in one of at least two different stabilizing torque directions. This has the advantage that stabilizing torques can be applied in dependence on a current load situation of the lifting yoke and/or the rotor blade, so that for instance depending on a wind direction or the like, the largest disturbance movements and/or the largest deflections of the lifted rotor blade can be compensated. In particular, the gyroscopic stabilization units may be switched between two or more different states, wherein in each state, they apply their respective stabilization torque in a different common stabilizing torque direction.

Preferably, the gyroscopic stabilization units are controlled to apply at least a yaw movement stabilizing torque in a yaw compensation stabilizing torque direction parallel or essentially parallel to the rope-like lifting means and/or a tilt movement stabilizing torque in a tilt compensation stabilizing torque direction orthogonal or essentially orthogonal to the rope-like lifting means and to the longitudinal axis of the rotor blade to be lifted.

For a rotor blade, which is lifted with its longitudinal axis, or its spanwise axis, respectively, in a horizontal orientation using the lifting yoke, a yaw movement is a rotation of the rotor blade around the lifting means, to which the lifting yoke is attached. This rotation of the rotor blade will cause also a horizontal movement of the root-side end of the blade, or its tip, respectively. The tilt movement of the rotor blade refers to a vertical tilt of the longitudinal axis of the rotor blade, which causes the root-end and the tip of the rotor blade to move up and down and hence to show a horizontal displacement.

A disturbance tilt movement may occur for instance by an aerodynamic lift acting on the rotor blade during lifting. The tilt angles during lifting may be smaller than a precession angle range of the gyroscopic stabilization units facilitating its compensation by the stabilization units. A tilting torque, or tilting moment, respectively, induced by the tilting movement of the rotor blade may be counter-acted and therefore may occur primarily at the lifting yoke underneath the lifting means and may be compensated using the stabilization units.

The tilt angle of the disturbance tilt movement of the rotor blade may be different from an angle of the lifting means and may have a different period than a pendulum action of the arrangement comprising the lifting yoke, the rotor blade and the lifting means. Hence, the gyroscopic stabilization units may be used advantageously to dampen a tilt movement of the rotor blade aerodynamically induced on the rotor blade during lifting resulting in more stable positions and less movements of the root-end and/or the tip of the blade.

The gyroscopic stabilization units can be adapted in such manner that they compensate a yaw movement by providing a yaw movement stabilizing torque, directed in particular upwards or downwards in vertical direction. Alternatively, the gyroscopic stabilization units may be arranged in such manner that they provide a tilt movement stabilization torque to the lifting yoke and/or the rotor blade. The tilt compensation stabilizing torque direction may in particular be a horizontal direction orthogonal to the longitudinal axis of the blade resulting in a torque turning the root-end of the blade upwards and the tip downwards, or vice versa.

Preferably, the gyroscopic stabilization units may be switched between a compensation of the yaw movement and a compensation of the tilt movement of the lifting yoke, or the rotor blade, respectively, to account for different load scenarios acting of the rotor blade. This has the advantage that the yaw movement of the lifting yoke and/or the rotor blade can be stabilized at and closely after the pick-up procedure to avoid clashes with the surroundings, in particular when the rotor blade is picked-up from the deck of a vessel. In the vicinity of the hub, to which the rotor blade shall be attached, a stabilization of the tilt movements may occur to reduce the movements of the root-end of the blade.

In a preferred embodiment, the magnitude of the stabilization torque and/or the orientation of the stabilizing torque direction is continuously adjusted during lifting in dependence of a movement measurement value, wherein the movement measurement value is measured by at least one movement sensor and describes a current disturbance movement of the lifting yoke and/or the rotor blade. By the at least one movement sensor, a movement measurement value of the lifting yoke and/or the rotor blade may be measured in order to determine their disturbance movement during lifting. By the gyroscopic stabilization units, the measured disturbance movement can be continuously adjusted linearly or non-linearly by applying corresponding stabilization torques for counter-acting and therefore compensating the disturbance movement.

Preferably, a movement sensor arranged at the lifting yoke, at the rotor blade, at the lifting means and/or in the vicinity of the lifting yoke is used. As movement sensor, for instance a small gyroscopic movement and/or acceleration sensor attached to the lifting yoke, the rotor blade and/or the lifting means may be used. The movement sensor may be for instance a passive gyroscope sensor.

By the movement sensor, the angular movements of the lifted rotor blade and/or of the lifting yoke may be measured to control the precession, or the deflection of the rotational axis, respectively, of the rotating members in a tuned linear or non-linear manner for generating a stabilizing torque with the required stabilizing torque direction. In addition, also the precession rate, or deflection rate, respectively, and/or the maximal deflection angle, around which the rotational axis is deflected, have an influence on the magnitude of the stabilizing torque and may be varied therefore in dependence of the movement measurement value.

Also the usage of other types of movement sensors in the vicinity of the lifting yoke, for instance optical sensors like cameras, which can optically determine a disturbance movement of the lifting yoke and/or the rotor blade, is possible. The movement sensor may be communicating with the gyroscopic stabilization units and/or with a control unit used for controlling the stabilization units, respectively, in order to apply the stabilization torque for compensating the detected disturbance movement by correspondingly adjusting the magnitude and/or the direction of the stabilization torque.

In a preferred embodiment of the invention, the main body is attached to the lifting means in a fixation section of the main body, wherein gyroscopic stabilization units arranged symmetrically offset to the fixation section are used. Advantageously, by such an arrangement of the gyroscopic stabilization means, both a tilt movement compensation and a yaw movement compensation can be conducted effectively. In addition, a symmetric arrangement of the gyroscopic stabilization units around the fixation area of the lifting means enables the usage of identical rotating members in the gyroscopic stabilization units ensuring that no tilting of the lifting yoke during lift occurs due to the weight of the gyroscopic stabilization unit.

Preferably, gyroscopic stabilization units arranged with an offset along the longitudinal axis of the rotor blade are used. The distance of the gyroscopic stabilization units along the longitudinal axis, or the longitudinal or spanwise direction, respectively, of the rotor blade, which may be in particular horizontally or essentially horizontally oriented during lifting, facilitates the application of a tilt movement compensation torque by the stabilization units. In addition, also the application of a yaw movement compensation torque can be conducted efficiently.

In a preferred embodiment, gyroscopic stabilization units each comprising a pivoting device coupled to the rotating member are used, wherein the pivoting device is adjustable by at least one pivoting actuator to pivot the rotational axis of the rotating member. By providing a pivoting device as a part of the stabilization units, a deflection of the rotational axis of the rotating member can be achieved by pivoting the rotational axis. It is possible to have a pivoting device which allows for pivoting the axis more than one direction so that different orientations of the rotational axis and therefore also different direction of the stabilizing torque can be obtained.

Preferably, the pivoting device comprises an inner gimbal attached to the rotating member and an outer gimbal attached to the main body of the lifting yoke. By changing the orientation of the outer gimbal relative to the main body of the lifting yoke and/or by changing the orientation of the inner gimbal relative to the outer gimbal, the rotational axis of the rotating member may be deflected. The rotating member may be rotatable around an axis attached to the inner gimbal so that by tilting the inner gimbal, a tilting of the rotational axis occurs. It is possible that the inner gimbal is pivotable relatively to the outer gimbal, wherein the outer gimbal may be fixed or movable, in particular rotatable and/or pivotable, relative to the main body of the lifting yoke.

The inner gimbal may be for example ring-shaped or ring segment shaped. The outer gimbal may also be ring-shaped or ring segment-shaped or it may have a D-shape, a C-shape or the like, forming a supporting structure for the inner gimbal.

In order to allow for a switching of the gyroscopic stabilization units between a yaw movement compensation and a tilt movement compensation, different arrangements of the stabilization units are possible using the aforementioned stabilization units with the inner gimbal and the outer gimbal.

In a first embodiment, the outer gimbal is fixedly attached to the main body and/or the rotor blade, wherein the inner gimbal is pivotable by at least one actuator, wherein the stabilizing torque and the magnitude of the stabilizing torque are adjusted by pivoting the inner gimbal to deflect the rotational axis. In order to switch between the yaw compensation torque direction and the tilt compensation torque direction, the rotational axis has to be pivoted by 90°, so that the corresponding yaw movement compensation torque and/or tilt movement compensation torque can be applied by the stabilization unit.

The first embodiment has the advantage that only the inner gimbal has to be movable by one or more actuators, while the outer gimbal may be fixedly attached and therefore immovable relative to the main body. However, since the outer gimbal is fixedly attached to the lifting yoke and/or the rotor blade, the rotational axis has to be pivoted around 90° for changing the stabilizing torque direction. This may require a high actuator strength for pivoting of the inner gimbal due to the rotating member rotating around the rotational axis.

In a second embodiment, the outer gimbal is rotatably attached to the main body and/or the rotor blade, wherein the outer gimbal is rotatable relative to the longitudinal axis of the rotor blade by a first actuator, wherein the inner gimbal is pivotable by a second actuator, wherein the magnitude of the stabilizing torque and the stabilizing torque direction are adjusted by deflecting the rotational axis either by rotating the outer gimbal while the inner gimbal is fixed relative to the outer gimbal or by pivoting the inner gimbal while the outer gimbal is fixed.

The second embodiment has the advantage that the rotational axis has only to be deflected according to the magnitude of the stabilization torque required. Change of the orientation around 90° is not required, since the direction of the stabilizing torque can be adjusted by moving either the inner gimbal or the outer gimbal for deflecting the rotational axis.

In the second embodiment, at least one first actuator for moving the inner gimbal and at least one second actuator for moving the outer gimbal are required. The inner gimbal and the outer gimbal may be fixable, for instance by a blocking means coupled to the inner gimbal and/or to the outer gimbal. In addition or alternatively, a fixation of the inner gimbal and/or the outer gimbal may occur by blocking the first actuator and/or the second actuator. In the latter case, the actuators are adapted to take the torque from the inner gimbal, or the outer gimbal, respectively in their fixed state.

Preferably, the rotor blade is lifted from a vessel to the hub of an off-shore wind turbine. In particular, for the installation of off-shore wind turbines, in the compensation of wind movements, which may be on the sea faster than on the shore, made be compensated. In addition, the ability to avoid the usage of taglines is in particular advantageous for lifting a rotor blade from a deck of a vessel due to the constrained place at the deck of a vessel. Alternatively, the method may also be used for lifting a rotor blade from an onshore position towards the hub of an onshore wind turbine to be installed.

A lifting yoke for a wind turbine rotor blade according to the invention comprises a main body, at least two gyroscopic stabilization units attached to the main body and a control unit, wherein the main body is attachable to a rope-like lifting means in a hanging arrangement and to a rotor blade to be lifted, wherein the stabilization units are arranged each laterally offset to the lifting means at the main body, wherein the stabilization units each comprise a rotatable member rotatable around a deflectable rotational axis, wherein the stabilization units are each adapted to apply an adjustable stabilizing torque in at least one stabilizing torque direction, wherein the control unit is adapted to carry out a method according to the invention.

Preferably, the gyroscopic stabilization units are operatable in such manner that their stabilizing torques are directed in the same stabilizing torque direction, wherein secondary torques caused by the gyroscopic stabilization units are applied in opposing directions.

In a preferred embodiment, the rotating members of the gyroscopic stabilization units are rotatable in opposite directions in relation to a parallel orientation of their rotational axes, wherein the rotational axes of the rotating members are deflectable in opposite directions for applying the stabilizing torque.

Preferably, the gyroscopic stabilization units are adjustable to apply the stabilizing torque in one of at least two different stabilizing torque directions.

Preferably, the gyroscopic stabilization units are adapted to apply at least a yaw movement stabilizing torque in a yaw compensation stabilizing torque direction parallel or essentially parallel to a rope-like lifting means coupled to the lifting yoke in a hanging arrangement and/or a tilt movement stabilization torque in a tilt compensation stabilizing torque direction orthogonal or essentially orthogonal to a rope-like lifting means coupled to the lifting yoke in a hanging arrangement and to the longitudinal axis of a rotor blade to be lifted.

In a preferred embodiment, the magnitude of the stabilization torque and/or the orientation of the stabilizing torque direction is continuously adjustable during lifting in dependence of a movement measurement value, wherein the movement measurement value is measured by at least one movement sensor and describes a current disturbance movement of the lifting yoke and/or the rotor blade.

Preferably, the movement sensor is arranged at a lifting yaw, at the rotor blade, at the lifting means and/or in the vicinity of the lifting yoke. The movement sensor is in particular connected to the control unit by a communication connection, which may be either a wired or a wireless communication.

In a preferred embodiment, the main body is attachable to the lifting means in a fixation section of the main body, wherein the gyroscopic stabilization units are arranged symmetrically offset to the fixation section. Preferably, the gyroscopic stabilization units are arranged with an offset or a non-symmetrical offset in a longitudinal direction of a rotor blade to be lifted.

Preferably, the gyroscopic stabilization units each comprise a pivoting device coupled to the rotating member, wherein the pivoting device is adjustable by at least one pivoting actuator adapted to pivot the rotational axis of the rotating member.

In a preferred embodiment, the pivoting device comprises an inner gimbal attached to the rotating member and an outer gimbal attached to the main body of the lifting yoke.

Preferably, the outer gimbal is fixedly attached to the main body, wherein the inner gimbal is pivotable by at least one actuator, wherein the stabilizing torque and the magnitude of the stabilizing torque are adjustable by pivoting the inner gimbal to deflect the rotational axis.

Alternatively, the outer gimbal is rotatably attached to the main body, wherein the outer gimbal is rotatable relative to the longitudinal axis of the rotor blade by a first actuator, wherein the inner gimbal is pivotable by a second actuator, wherein the magnitude of the stabilization torque direction and the stabilizing torque direction are adjustable by deflecting the rotational axis either by rotating the outer gimbal while the inner gimbal is fixed relative to the outer gimbal or by pivoting the inner gimbal while the outer gimbal is fixed.

All details and advantages described in relation to the method according to the invention apply correspondingly to the lifting yoke according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematic depiction of a method according to the invention for lifting a wind turbine rotor blade using an embodiment of a lifting yoke according to the invention,
- Fig. 2: a schematic depiction of a lifting yoke attached to a crane boom by a plurality of taglines,
- Fig. 3: a detailed view on the embodiment of the lifting yoke according to the invention used for tilt movement compensation,
- Fig. 4: a further detailed view on the lifting yoke according to the invention used for yaw movement compensation,
- Fig. 5: the first stabilization unit of the embodiment of the lifting yoke according to the invention in a configuration for cancelling secondary torques,
- Fig. 6: the second stabilization unit of the embodiment of the lifting yoke according to the invention in the configuration for cancelling secondary torques,
- Fig. 7: one of the gyroscopic stabilization units of the embodiment of the lifting yoke configured for tilt movement compensation,
- Fig. 8: one of the gyroscopic stabilization units of the embodiment of the lifting yoke configured for yaw movement compensation,
- Fig. 9: one of the gyroscopic stabilization units of a further embodiment of a lifting yoke according to the invention configured for tilt movement compensation, and
- Fig. 10: one of the gyroscopic stabilization units of the further embodiment of the lifting yoke according to the invention configured for yaw movement compensation.

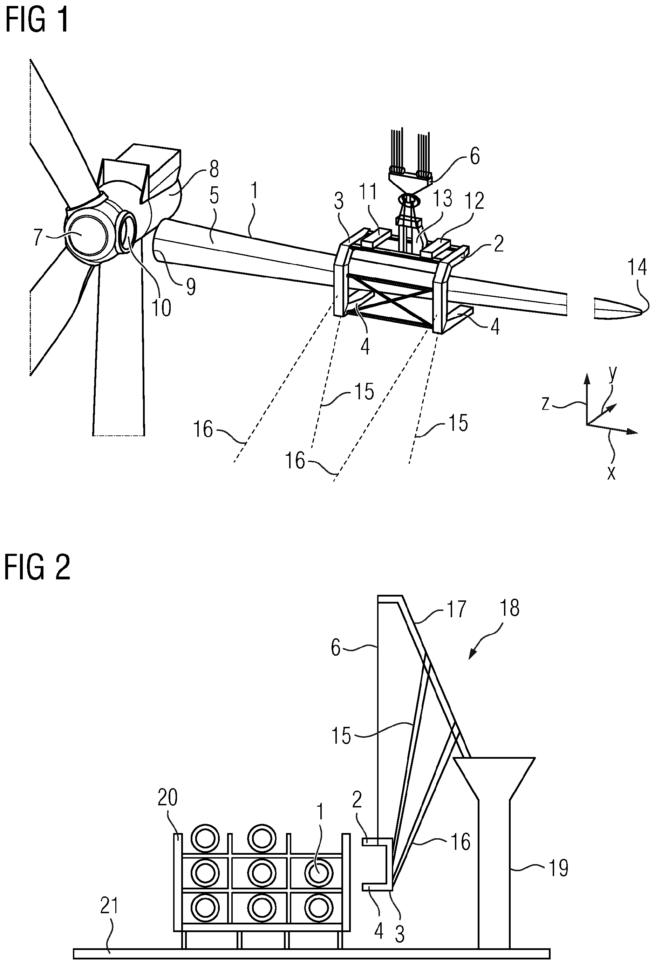

In fig. 1, an embodiment for a method for lifting a wind turbine rotor blade 1 using a lifting yoke 2 is shown. The lifting yoke 2 comprises a main body 3, which is attached to the rotor blade 1. Therefore, the main body 3 comprises two attachment sections 4, which encompass an outer circumference 5 of the rotor blade 1 at least partly. In particular, the rotor blade 1 may be clamped by the lifting yoke 2 so that the rotor blade 1 may be lifted by at least one rope-like lifting means 6 attached to the main body 3 of the lifting yoke 2.

The rotor blade 1 is lifted for attachment of the rotor blade 1 to a hub 7 of a wind turbine 8 to be installed. Therefore, a root-end 9 of the rotor blade 1 has to be attached to a corresponding attachment section 10 at the hub 7. This attachment requires that the root-end 9 of the rotor blade 1 is brought into close contact with the attachment section 10. Therefore, the rotor blade 1 should not exhibit disturbance movements like swinging and/or deflection movements so that the root-end 9 can be brought precisely into contact with the attachment section 10 at the hub 7 for installation of the rotor blade 1.

To at least partly compensate such disturbance movements of the rotor blade 1, which may be caused for instance by wind-induced torques acting on the rotor blade 1, the lifting yoke 2 comprises two gyroscopic stabilization units 11, 12, which are attached to the main body 3 of the lifting yoke 2. As will be described later in more detail, the gyroscopic stabilization units 11, 12 each comprise a rotating member with a deflectable rotational axis, wherein the rotating members of the gyroscopic stabilization units 11, 12 each apply an adjustable stabilizing torque in at least one stabilizing torque direction in dependence of a disturbance movement of the lifting yoke 2 and/or the rotor blade 1.

The gyroscopic stabilization units 11, 12 are arranged laterally offset from the lifting means 6 at the main body 3. In this embodiment, the gyroscopic stabilization units 11, 12 are arranged offset from a fixation section 13 of the main body 3, which is connected to the rope-like lifting means 6. The fixation section 13 is formed as a loop-shaped frame structure of the main body 3, wherein the fixation section 13 is attached to the lifting means 6. Alternatively, the fixation section 13 may be a mechanical tilt arm, a sledge or another type of fixation module that connects the main body 3 to the lifting means 6. The usage of a such a mechanical module has the advantage that an offset of the center of gravity of the lifting yoke 2 is adjustable and/or correctable.

The gyroscopic stabilization units 11, 12 are arranged offset from the fixation section 13 and therefore laterally offset from the lifting means 6 in a longitudinal direction of the rotor blade 1 to be lifted. The longitudinal direction of the rotor blade 1 spans from the root-end 9 to a tip 14 of the rotor blade 1 and is horizontally oriented during the lifting procedure. The distance between the stabilization units 11, 12 may be in particular between 0.5 m and 30 m, preferably between 2.5 m and 7.5 m, in particular depending on the size of the lifting yoke 2 and/or of the rotor blade 1 to be lifted. The size of the stabilization units 11, 12, or the maximum stabilization torque that the stabilization units 11, 12 can create, respectively, may depend on the weight and/or the size of the rotor blade 1 to be lifted.

By the gyroscopic stabilization units 11, 12, a disturbance movement, or a disturbance rotation, respectively, of the lifting yoke 2 and/or the rotor blade 1 can be compensated at least partly during lifting of the rotor blade 1 so that the installation of the rotor blade 1 on the wind turbine 8 is facilitated. It is possible that the gyroscopic stabilization units 11, 12 are used together with taglines 15, 16, which further stabilize the lifting yoke 2.

The taglines 15 are thereby used in particular for a vertical stabilization, wherein the taglines 16 are used in particular for a horizontal stabilization. The taglines 15, 16 may be attached to a crane tower and/or a crane boom of a crane bearing the lifting means 6. Due to the stabilization function of the gyroscopic stabilization units 11, 12, less taglines 15, 16 may be used. It is also possible that no taglines 15, 16 are used and that all compensation of disturbance movements of the rotor blade 1 and/or the lifting yoke 2 occurs by using the gyroscopic stabilization units 11, 12.

The ability to use less or no taglines 15, 16 during lifting of the rotor blade 1 has the advantage that in particular a picking up of the rotor blade 1 is facilitated, since no taglines span in the vicinity of the lifting yoke 2. In particular, when the rotor blade 1 is stored on the deck of a vessel used for transportation of the rotor blades 1 to the vicinity of the wind turbine 8, the space on top of the vessel deck may be occupied by a plurality of different structures making it difficult to lower the lifting yoke 2 close to the rotor blade 1 for picking up the rotor blade 1, when a plurality of taglines 15, 16 runs in between the lifting yoke 2 and a crane boom and/or a crane tower of a crane used for lifting the rotor blade 1.

This is shown schematically in fig. 2, in which the lifting yoke 2 is shown being attached to a crane boom 17 of a crane 18 via the lifting means 6. The crane 18 may be arranged for instance on a support tower structure 19. The lifting yoke 2 is used for picking up one of the rotor blades 1 that are stacked in a frame structure 20 on the top of a deck 21 of a vessel. The taglines 15, 16 connecting the lifting yoke 2 to the crane boom 18 require free space between the lifting yoke 2 and their respective fixation points at the crane 18. In addition, also the angles between the taglines 15, 16 and the crane boom 18 may be unfavourable, in particular when the lifting yoke 2 has been lowered towards the deck 21, so that the mainly vertical forces, which may act from the taglines 15, 16 to the lifting yoke 2 make the horizontal controlling of the lifting yoke 2 more difficult.

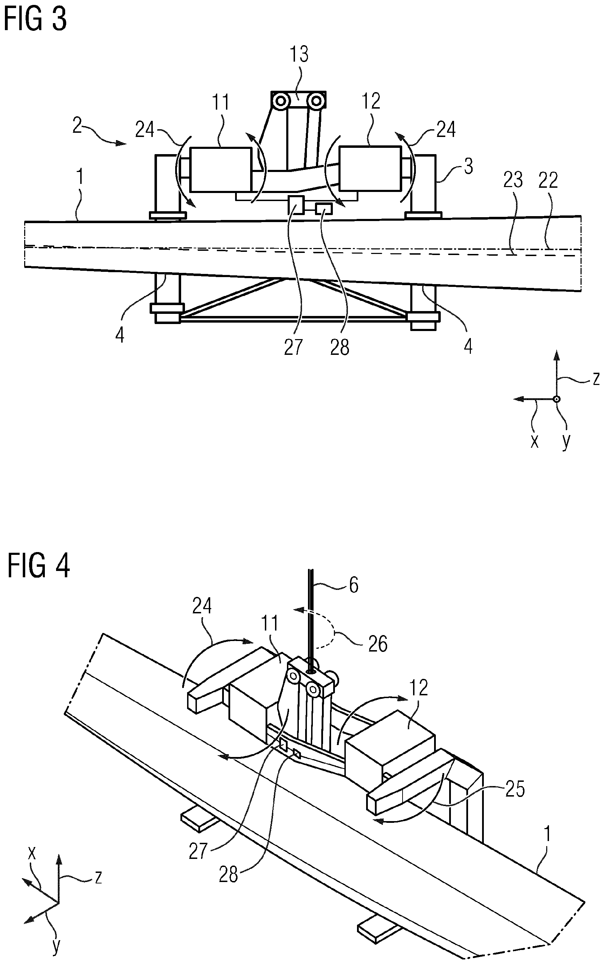

In fig. 3, a detailed view on an embodiment of the lifting yoke 2 is shown. In this direction, the longitudinal axis 22 of the rotor blade 1 is shown in a steady state and in a deflected state as a dashed line 23. The deflected state of the rotor blade 1 is caused by a tilt movement of the rotor blade 1, which makes the root-end 9 and the tip 14 of the rotor blade 1 to move up and down.

As it is shown schematically by the arrows 24, 25, the stabilization unit 11, 12 cause a counteracting movement of the rotor blade 1 by applying each a tilt movement stabilizing torque to the rotor blade 1 directed in a stabilizing torque direction orthogonal to the drawing plane. Both stabilization units 11, 12 apply the stabilization torque in the same direction so that the tilt movement of the rotor blade 1 can be compensated due to the stabilization torque.

In fig. 4, a further detailed view on the embodiment of the lifting yoke 2 is shown. In this embodiment, the stabilization units 11, 12 are used for compensating a yawing movement of the rotor blade 1 and/or of the lifting yoke 2. The yawing movement describes a rotation of the rotor blade 1 along the direction of the rope-like lifting means 6, which is arranged in particular vertical. The direction of the yawing movement is schematically depicted by the dashed arrow 26.

The stabilization units 11, 12 each apply a yaw stabilization torque in a vertical direction resulting in a movement of the rotor blade 1 according to the arrows 24, 25. This movement compensates for instance a wind-induced disturbance yawing movement of the rotor blade 1 so that the position of the rotor blade 1 may be stabilized during lifting procedure.

At it is shown schematically, the stabilization units 11, 12 are connected to a control unit 27, which controls the creation of the stabilization torque by the stabilization units 11, 12. The control unit 27 communicates with a movement sensor 28, which measures a movement measurement value describing a current disturbance movement of the lifting yoke 2 and/or the rotor blade 1. The control unit 27 controls the stabilization units 11, 12 in particular continuously to apply varying stabilization torques for compensation of the current displacement movement, in particular during the entire lifting of the rotor blade 1.

As depicted, the movement sensor 28 may be arranged at the lifting yoke 2. Alternatively, it is possible that the movement sensor 28 is arranged at the rotor blade 1, at the lifting means 6 and/or in the vicinity of the lifting yoke 2. As a movement sensor 28 arranged at the lifting yoke 2, the rotor blade 1 and/or the lifting means 6, for instance a passive gyroscopic sensor may be used measuring the movement and/or acceleration of the lifting yoke 2 and/or the rotor blade 1 in one or more dimensions. As a sensor arranged in the vicinity of the lifting yoke 2, an optical sensor like a camera or the like may be used. The movement sensor 28 is communicating with the control unit 27, for instance by a wire-based communication or via a wireless communication for transmitting the movement measurement value to the control unit 27.

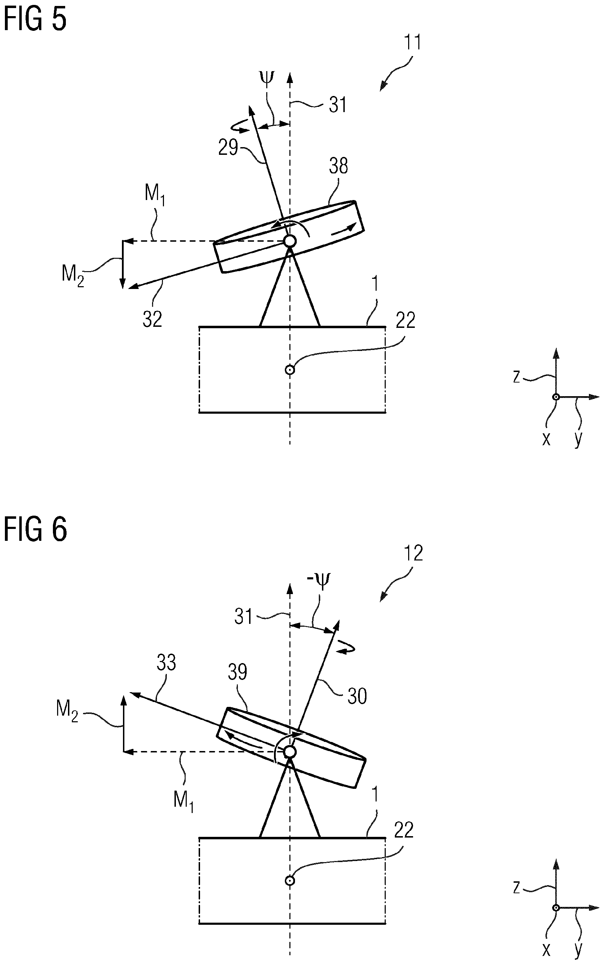

In particular, the control unit 27 controls the stabilization units 11, 12 in such manner that their stabilizing torques are directed in the same stabilizing torque direction, wherein secondary torques caused by the stabilization units 11, 12 are applied in opposing directions in particular orthogonal to the directions of the stabilization torques. This has the effect that secondary torques, which are created by the stabilization units 11, 12 during the application of the stabilizing torque, can cancel out entirely or at least partly further stabilizing the orientation of the lifted rotor blade 1. This effect is described further in detail in relation to fig. 5.

In fig. 5, schematically the first stabilization unit 11 is shown together with the rotor blade 1. The second stabilization unit 12, which is arranged offset in the longitudinal direction of the rotor blade 1 and hence offset in a direction orthogonal to the drawing plane, is depicted in Fig. 6. The main body 3 of the lifting yoke 2 is omitted both in Fig. 5 and Fig. 6 for the sake of simplicity. The longitudinal axis 22 of the rotor blade 1 extends in x-direction and hence orthogonal to the drawing plane.

Each of the stabilization units 11, 12 comprises a rotatable or rotating member 38, 39, which rotates around a rotational axis 29, 30. The stabilization torque for tilt movement compensation is created by deflecting the rotational axis, 29, 30 by an angle ψ. In particular, by the angular velocity, with which the rotational axis 29, 30 is deflected, the magnitude of the torque can be adjusted. The rotational axes 29, 30 are deflected in opposite directions, hence the rotational axis 29 is deflected by a deflection angle ψ and the rotational axis 30 correspondingly by a deflection angle -ψ in relation to a reference vertical orientation 31.

Furthermore, the rotating members 38, 39 are rotating around their respective rotational axis 29, 30 in opposite directions, wherein the rotating member 38 of the first stabilization unit 11 rotates around the rotational axis 29 in counter clockwise direction and the rotating member 39 of the second stabilization unit 12 rotates around the rotational axis 30 in clockwise direction. Together with the deflection of the rotational axes 29, 30 of the rotating members 38, 39 in opposite directions, a compensation of a secondary yaw torques created by stabilization units 11, 12 is achieved, so that no additional movement by the secondary torques created occurs on the rotor blade 1. However, the stabilizing torques are created in the same direction both contributing to the stabilization of the rotor blade 1 and/or the lifting yoke 2.

In figures 5 and 6, the creation of the torque of the stabilization units 11, 12 occurs in the stabilizing torque directions 32, 33. A torque created in these directions can be regarded as a stabilization torque M₁ and a secondary torque M₂, which are shown schematically as vectors in figures 5 and 6. As it can be seen, the stabilization torques M₁ used for compensating the tilting movement of the rotor blade 1 are directed in the same direction, wherein the secondary torques M₂ are arranged in opposite directions so that they cancel out entirely. This effect is caused by the opposing rotational directions of the rotating members 38, 39 as well as by the deflection of the rotational axes 29, 30 in opposing directions.

To allow for compensation of both yaw movements and tilt movements, the stabilization units 11, 12 are adapted for applying their stabilization torque in one of at least two different directions. In particular, the stabilization units 11, 12 are controlled to apply a tilt movement stabilizing torque in a tilt compensation stabilizing torque direction orthogonal or essentially orthogonal to the rope-like lifting means 6 and the longitudinal axis 22 of the rotor blade 1 to be lifted, as it is shown for the stabilization units 11, 12 in Figs. 5 and 6.

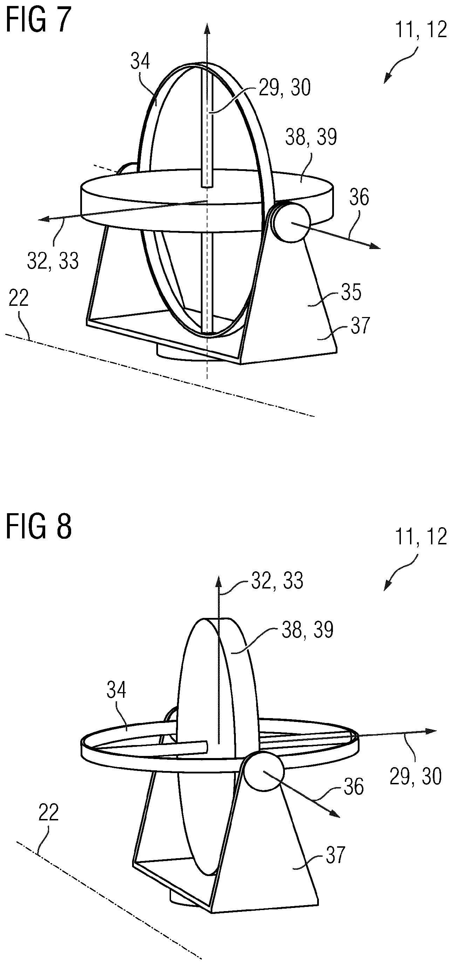

To account for different load situations, the stabilization units 11, 12 can be configured for applying the stabilizing torque in different directions. It may be desired that the stabilization units 11, 12 may also be used for applying for instance a yaw movement stabilizing torque in the yaw compensation stabilizing torque direction parallel or essentially parallel to the rope-like lifting means 6. Therefore, the stabilization units 11, 12 may be adapted to switch between two or more stabilizing torque directions, as will be described in relation to figs. 7 to 10.

In fig. 7, a first embodiment of the lifting yoke 2 is shown. For the sake of clarity, only one of the stabilization units 11, 12 is shown. The stabilization units 11, 12 each comprise a pivoting device 37 coupled to the rotating member 38, 39. The pivoting device 37 is adjustable by at least one pivoting actuator (not shown) to pivot the rotational axis 29, 30 of the rotating members 38, 39. The blade longitudinal axis 22 is shown schematically as dashed line.

The pivoting device 37 comprises an inner gimbal 34 attached to the rotating member 38, 39, wherein by pivoting the inner ring-shaped gimbal 34, the rotation axis 29, 30 of the rotating members 38, 39 can be pivoted, or deflected, respectively, for example within a deflection angle range from -70° to +70°. The inner gimbal 34 is supported in an outer gimbal 35, wherein the inner gimbal 34 can be pivoted relatively to the outer gimbal 35. In the first embodiment, the outer gimbal 35 is fixedly attached to the rotor blade 1.

The rotational axes 29, 30 of the respective stabilization units 11, 12 are deflected by pivoting the inner gimbal 34 using the corresponding actuator. By applying different rotation directions of the rotating members 38, 39 and a deflection of the rotational axis in opposing directions as shown in Fig. 5 and 6, secondary torques created by the stabilization units 11, 12 can be cancelled out, while the stabilization torques are applied in the same direction to the rotor blade 1, and/or the lifting yoke 2. In the configuration shown in fig. 7, a tilt stabilization, or the dampening of a disturbance tilt movement, respectively, occurs.

In fig. 8, the stabilization units 11, 12 are shown in a configuration for yaw movement compensation. Therefore, the inner gimbal 34 is pivoted in such manner that the rotational axes 29, 30 of the rotating members 38, 39 are rotated by 90°. This changes the output directions 32, 33 of the stabilization torque, so that the stabilization units 11, 12 may be used for yaw movement compensation.

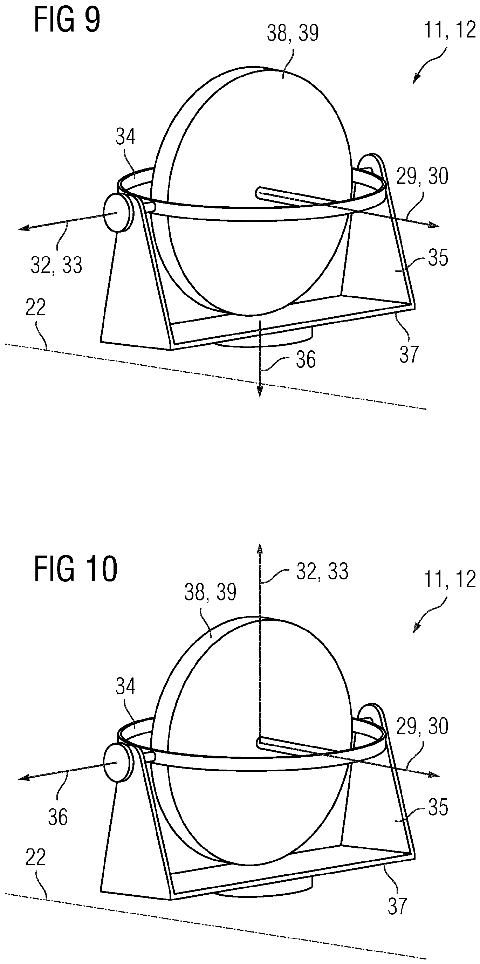

In fig. 9, a second embodiment of a lifting yoke 2 is shown. In this embodiment, the orientation of the outer gimbal 35 of the pivoting device 37 is different relative to the longitudinal axis 22 of the rotor blade 1 compared to the first embodiment. The inner gimbal 34 is pivotable by a first actuator (not shown) correspondingly to the inner gimbal 34 of the first embodiment. Furthermore, the outer gimbal 35 is rotatable relative to the longitudinal axis 22 of the rotor blade 1 by at least one second actuator (not shown), so that in the configuration of the stabilization unit 11, 12 depicted in Fig. 9, a tilt movement compensation can occur.

Therefore, the rotating means 38, 39 rotate around the rotational axes 29, 30. The inner gimbal 34 is fixed and does not move relative to the outer gimbal 35. This may occur for instance by blocking the first actuator and/or by applying a counter force fixating the position of the inner gimbal 34. By a rotation of the outer gimbal 35 around an axis 36, a tilt stabilizing torque is created in the stabilizing torque direction 32, 33.

Since in this embodiment also the outer gimbal 35 is rotatable, the stabilization units 11, 12 may also be used for yaw movement compensation without changing the direction of the rotational axes 29, 30 of the rotatable members 38, 39.

In fig. 10, the stabilization unit 11, 12 according to the second embodiment of the lifting yoke 2 is shown in a configuration for yaw movement compensation. The yaw movement, or the corresponding yaw torque, respectively, is compensated by fixating the position of the outer gimbal 35, for instance by blocking the second actuator and/or by applying a counter force fixating the position of the outer gimbal 35. The rotation of the rotatable members 38, 39 occurs around the rotational axes 29, 30 either in clockwise or anti-clockwise direction for the first stabilization unit 11, or the second stabilization unit 12, respectively.

In this configuration, the magnitude of the stabilization torque is adjusted by deflecting the rotational axis 29, 30 around the axis 36 by pivoting the inner gimbal 34. The stabilization torque for yaw movement compensation has the stabilizing torque direction 32, 33.

The ability to operate the stabilization units 11, 12 in these two different configurations allows for using the stabilization units 11, 12 both for tilt movement compensation and for yaw movement compensation without the requirement for tilting the rotational axis around 90° as it is required in the first embodiment. Therefore, also the outer gimbal 35 has to be coupled with a second actuator, so that it may rotated for the tilt movement compensation as described in relation to fig. 9.

To apply a sufficient torque to the rotor blade 1 and/or to the lifting yoke 2, the rotating members 38, 39 may each comprise a weight between 100 kg and 20 t, in particular between 5 t and 15 t, for example 10 t, in all embodiments. It is possible that in the aforementioned embodiments, more than two stabilization units 11, 12 are used. Preferably, an even number of stabilization units 11, 12 is used, wherein the stabilization units 11, 12 are arranged symmetrically around the lifting means 6, or the fixation section 13 of the main body 3 of the lifting yoke 2. However, also the usage of an uneven number of stabilization units 11, 12 and/or an unsymmetric arrangement of the stabilization units 11, 12 with respect to the fixation section 13 is possible. When using an uneven number of stabilization units 11, 12, it is possible that one or more larger stabilization units 11, 12 adapted to create a stabilization torque with a larger maximal magnitude and one or more smaller stabilization units 11, 12 adapted for creating a stabilization torque with a smaller maximal magnitude are combined.

It is possible in all embodiments that the stabilization units 11, 12 or a part of a plurality comprising more than two stabilization units 11, 12 are attached to the rotor blade 1, in particular to the outer surface of the rotor blade 1. Also in this case, stabilizing torques may be created as previously described.

Although the present invention has been described in detail with reference to the preferred embodiment, the present invention is not limited by the disclosed examples from which the skilled person is able to derive other variations without departing from the scope of the invention.

## Claims

1. Method for lifting a wind turbine rotor blade (1) using a lifting yoke (2) comprising a main body (3) attached to the rotor blade and to a rope-like lifting means (6), wherein at least two gyroscopic stabilization units (11, 12) each arranged laterally offset to the lifting means (6) at the main body (3) and/or the rotor blade (1) are used, wherein the gyroscopic stabilization units (11, 12) each comprise a rotating member (38, 39) with a deflectable rotational axis (29, 30), wherein the rotating members (38, 39) apply an adjustable stabilizing torque in at least one stabilizing torque direction (32, 33) in dependence of a disturbance movement of the lifting yoke (2) and/or the rotor blade (1) at least temporarily during lifting.

2. Method according to claim 1, **characterized in that** the gyroscopic stabilization units (11, 12) are operated in such manner that their stabilizing torques are directed in the same stabilizing torque direction (32, 33), wherein secondary torques caused by the gyroscopic stabilization units (11, 12) are applied in opposing directions.

3. Method according to claim 2, **characterized in that** the rotating members (38, 39) of the gyroscopic stabilization units (11, 12) are rotating in opposite directions in relation to a parallel orientation of their rotational axes (29, 30), wherein the rotational axes (29, 30) of the rotating members (38, 39) are deflected in opposite directions for applying the stabilizing torque.

4. Method according to one of the preceding claims, **characterized in that** the gyroscopic stabilization units (11, 12) are adjustable to apply the stabilizing torque in one of at least two different stabilizing torque directions (32, 33).

5. Method according to one of the preceding claims, **characterized in that** the gyroscopic stabilization units (11, 12) are controlled to apply at least a yaw movement stabilizing torque in a yaw compensation stabilizing torque direction parallel or essentially parallel to the rope-like lifting means (6) and/or a tilt movement stabilizing torque in a tilt compensation stabilizing torque direction orthogonal or essentially orthogonal to the rope-like lifting means (6) and to the longitudinal axis (22) of the rotor blade (1) to be lifted.

6. Method according to one of the preceding claims, **characterized in that** the magnitude of the stabilization torque and/or the orientation of the stabilizing torque direction (32, 33) is continuously adjusted during lifting in dependence of a movement measurement value, wherein the movement measurement value is measured by at least one movement sensor (28) and describes a current disturbance movement of the lifting yoke (2) and/or the rotor blade (1).

7. Method according to claim 6, **characterized in that** a movement sensor (28) arranged at the lifting yoke (2), at the rotor blade (1), at the lifting means (6) and/or in the vicinity of the lifting yoke (2) is used.

8. Method according to one of the preceding claims, **characterized in that** the main body (3) is attached to the lifting means (6) in a fixation section (13) of the main body (3), wherein gyroscopic stabilization units (11, 12) arranged symmetrically offset to the fixation section (13) are used.

9. Method according to one of the preceding claims, **characterized in that** gyroscopic stabilization units (11, 12) arranged with an offset along the longitudinal axis (22) of the rotor blade (1) are used.

10. Method according to one of the preceding claims, **characterized in that** gyroscopic stabilization units (11, 12) each comprising a pivoting device (37) coupled to the rotating member (38, 39) are used, wherein the pivoting device (37) is adjustable by at least one pivoting actuator to pivot the rotational axis (29, 30) of the rotating member (38, 39).

11. Method according to claim 10, **characterized in that** the pivoting device (37) comprises an inner gimbal (34) attached to the rotating member (38, 39) and an outer gimbal (35) attached to the main body (3) of the lifting yoke (2).

12. Method according to claim 11, **characterized in that** the outer gimbal (35) is fixedly attached to the main body (3) and/or the rotor blade (1), wherein the inner gimbal (34) is pivotable by at least one actuator, wherein the stabilizing torque and the magnitude of the stabilizing torque are adjusted by pivoting the inner gimbal (34) to deflect the rotational axis (29, 30).

13. Method according to claim 11, **characterized in that** the outer gimbal (35) is rotatably attached to the main body (3) and/or the rotor blade (1), wherein the outer gimbal (35) is rotatable relative to the longitudinal axis (22) of the rotor blade (1) by a first actuator, wherein the inner gimbal (35) is pivotable by a second actuator, wherein the magnitude of the stabilizing torque and the stabilizing torque direction (32, 33) are adjusted by deflecting the rotational axis (29, 30) either by rotating the outer gimbal (35) while the inner gimbal (34) is fixed relative to the outer gimbal (35) or by pivoting the inner gimbal (34) while the outer gimbal (35) is fixed.

14. Method according to one of the preceding claims, **characterized in that** the rotor blade (1) is lifted from a vessel to the hub (7) of an off-shore wind turbine (8).

15. Lifting yoke for a wind turbine rotor blade (1) comprising a main body (3), at least two gyroscopic stabilization units (11, 12) attached to the main body (3) and a control unit (27), wherein the main body (3) is attachable to a rope-like lifting means (6) in a hanging arrangement and to a rotor blade (1) to be lifted, wherein the stabilization units (11, 12) are arranged each laterally offset to the lifting means (6) at the main body (3), wherein the stabilization units (11, 12) each comprise a rotatable member (38, 39) rotatable around a deflectable rotational axis (29, 30), wherein the stabilization units (11, 12) are each adapted to apply an adjustable stabilizing torque in at least one stabilizing torque direction (32, 33), wherein the control unit (27) is adapted to carry out a method according to one of the preceding claims.
